# EUROPEAN PATENT APPLICATION

(11) **EP 4 529 076 A1**
(43) Date of publication of application: **26.03.2025**
(21) Application number: 23198818.9
(22) Date of filing: 21.09.2023
(51) Int. Cl.: H04L 9/00, H04L 9/40, G06Q 10/0832, G06Q 30/018, G06Q 30/0601

(54) **METHOD, SYSTEM, COMPUTER PROGRAM AND DIGITAL WALLET TO EXCHANGE VERIFIABLE INFORMATION ABOUT A SHIPPED OBJECT**

(71) Applicant: e-Origin, 4460 Grâce-Hollogne (BE)
(72) Inventor: KYRIAKIDES, Yanis, 1933 Sterrebeek (BE)
(74) Representative: Calysta NV

(57) **Abstract**

The invention uses a distributed ledger (F2) to store information about a shipment ID (IDS) of a shipped object (11) and about a first wallet (A2). This allows a second wallet (B2) to contact the first wallet (A2) to request verifiable object information (P(O)) about the shipped object (11).

## Description

### Technical Field

The present invention relates to the exchange of verifiable information about a shipped object between subjects which do not know each other.

### Prior art

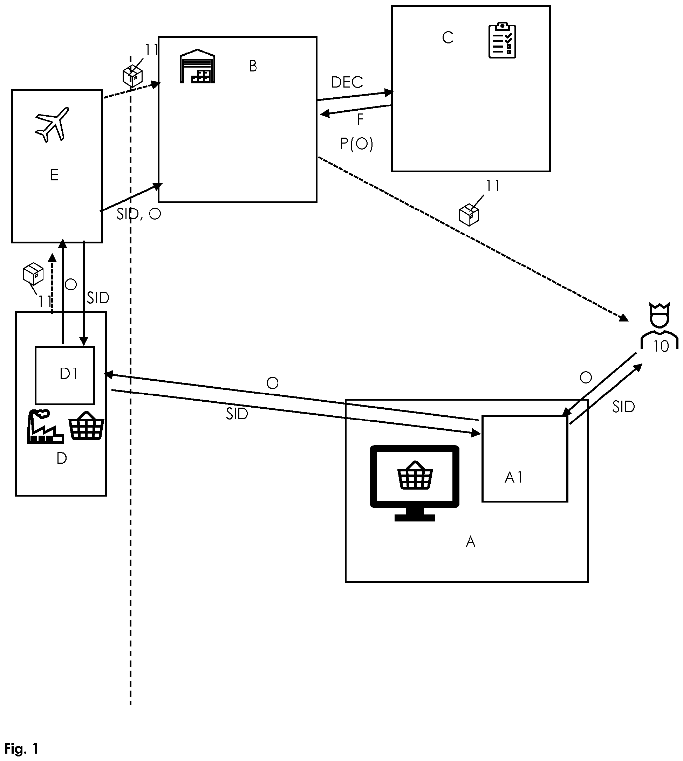

When shipping objects over customs borders, customs require often information about the shipped object like its value, its nature, etc. Fig. 1 shows an exemplary prior art process of a client 10 ordering over an e-commerce platform A1 a product from a subject D being located outside of the customs region. The client 10 and the subject A owning the e-commerce platform A1 residing within the customs region. The client 10 places its order O on the platform A1. Once the client 10 has paid the order, the order details are forwarded to the subject D or its computer system D1. The subject D uses an international shipment provider E to send the ordered product to the client 10. The shipment provider E associates a shipment ID to the shipped object with the ordered products, e.g. a parcel. This shipment ID SID is sent back to the e-commerce platform A1 and to the client 10 to allow them to follow the shipped object. Since the ordered product enters the customs region from outside, it has to pass customs. Therefore, the shipment provider E uses normally a customs declarant B, also called customs broker. The customs declarant B is registered at the customs authorities C to make the customs declaration of the shipped object entering the customs region. The customs declarant B receives declared object information about the shipped object, e.g. the order details O like type of product(s) and value(s) associated with the shipment ID SID from the shipment provider E or the sender D and prepares the customs declaration DEC based on this received information O. The customs declarant B is responsible for the correctness of this information but needs to rely on the information received from the sender D or the shipment provider E which are often flawed or expressly false to reduce tax payments. The customs authorities C asks for some shipped objects the customs declarant to provide custom proofs so that the declared object information can be verified. The custom declarant can either ask the client 10 or over the shipment provider E and the sender D the e-commerce platform A to provide the custom proofs requested in order to fulfill the revision requirements from the customs. These requests are still realized manually and are administrationally cumbersome and time-consuming. This leads to long blockings of these shipped objects at the customs declarants B which blocks their storage and leads to delayed deliveries at the client 10.

Any attempts to solve this by an automatic exchange of custom proofs between the custom declarant and the e-commerce platform A1 failed due to the need of central registries for ordered goods and the corresponding problems with data privacy. Another problem of all proposed solutions was to assure that the information exchanged could not be manipulated by intermediate subjects.

This problem applies not only to customs, but also to any other subject B between the sender D and the addressee 10 which requires rightfully to get information about shipped object from a further subject A without knowing the subject A.

### Brief summary of the invention

It is the object of the invention to provide a communication concept which avoids the problems of the state of the art.

According to the invention, this object is solved by the methods and computer program according to the independent claims.

According to the invention, this object is solved by a method for obtaining at a second subject verifiable object information about a shipped object from a first subject, the method comprising the steps of: a first processing means of the first subject stores object information about a shipped object, the first processing means comprises a first wallet which is verifiably identifiable in a distributed ledger based on a first DID, wherein the first DID contains an end point to contact the first wallet; the first wallet receives a shipment ID for the shipped object from the first processing means; the first wallet stores a shipment DID in the distributed ledger, wherein the shipment DID contains the shipment ID and the first DID; a second processing means of the second subject comprises a second wallet which is verifiably identifiable in the distributed ledger based on a second DID; the second wallet receives the shipment ID of the object; the second wallet retrieves from the distributed ledger shipment DID based on the shipment ID and retrieves the first DID from the shipment DID; the second wallet verifies the first DID in the distributed ledger and verifies the shipment DID based on the first DID; the second wallet contacts the first wallet based on the end point of the first DID and requests verifiable object information from the first wallet; the first wallet verifies the second wallet and its permission to request verifiable object information based on the second DID in the distributed ledger; the first wallet requests from the first processing means the requested object information; the first wallet receives the object information from the first processing means and prepares the verifiable object information based on the received object information and based on the first DID to obtain the verifiable object information which is verifiable based on the first DID; the first wallet sends the verifiable object information prepared to the second wallet; and the second wallet verifies the verifiable object information based on the first DID.

According to the invention, this object is solved by a method for a first wallet of a first subject to provide verifiable object information to a second subject about a shipped object, the method comprising the following steps: the first wallet storing a first DID which allows to verify the identity of the first wallet and its permissions in a distributed ledger, wherein the first DID contains an end point to contact the first wallet; the first wallet receives a shipment ID for the shipped object from a first processing means of the first subject; the first wallet stores a shipment DID in the distributed ledger, wherein the shipment DID contains the shipment ID and the first DID; the first wallet receives from a second wallet a request to provide verifiable object information from the first wallet, wherein the first wallet receives the request at the end point defined in the first DID; the first wallet verifies in the distributed ledger the second wallet and its permission to request verifiable object information based on a second DID of the second wallet; the first wallet requests from the first processing means the requested object information; the first wallet receives the object information from the first processing means and prepares the verifiable object information based on the received object information and based on the first DID; and the first wallet sends the verifiable object information prepared to the second wallet.

According to the invention, this object is solved by a method for a second wallet of a second subject to receive verifiable object information from a first subject about a shipped object, the method comprising the following steps: the second wallet stores a second DID which allows to verify the identity of the second wallet and its permissions in a distributed ledger; the second wallet receives the shipment ID of the object from a second processing means of the second subject; the second wallet retrieves from the distributed ledger a shipment DID based on the shipment ID and retrieves the first DID from the shipment DID; the second wallet verifies the first DID in the distributed ledger and verifies the shipment DID based on the first DID; the second wallet contacts the first wallet based on an end point of a first wallet of the first subject, wherein the end point of the first wallet is contained in the first DID; the second wallet requests verifiable object information from the first wallet; the second wallet receives the verifiable object information from the first wallet; and the second wallet verifies the verifiable object information based on the first DID.

According to the invention, this object is solved by a computer program comprising a set of instructions to perform, when executed on a processing means, the steps of a method of one of the previous methods.

According to the invention, this object is solved by a system comprising a first processing means with a first wallet, a second processing means with a second wallet and configured to perform the steps of the first and second processing means as described above.

The use of the wallets, DIDs to identify the wallets and the distributed ledger to verify the DIDs and wallets in combination with the use of the distributed ledger to store the contact information or DID of the first subject together with the shipment ID allows first the second wallet to identify the first wallet based on the shipment ID and to contact the first wallet to request the verifiable object information. Due to the DIDs of the wallets and of the shipment, the object information received at the second wallet can be verified in terms of identity, origin and integrity. Nevertheless, there is no need to store any confidential information in a central register which often is against data privacy laws. All exchanged information can be realized instantaneously without the need to hold the shipped object for weeks until the requested information is received by traditional communication means and until human users intervene on the subject.

The dependant claims refer to further advantageous embodiments.

In one embodiment, the distributed ledger comprises a first distributed ledger and a second distributed ledger distinct from the first distributed ledger, wherein the first DID, the second DID and the third DID are registered and verifiable in the first distributed ledger, and the shipment DID is registered and searchable in the second distributed ledger.

In one embodiment, the second processing means receives an object information associated to the shipment ID claimed by a shipper of the shipped object, wherein the second processing means receives the verifiable object information from the second wallet and compares the claimed object information with the verifiable object information to verify the claimed object information. The invention allows thus to verify the information received for the shipped object, e.g. in a transport manifest, with verifiable object information from the first subject.

In one embodiment, the second processing means sends declaration information based on at least one of the verifiable object information and the claimed object information to a third processing means of a third subject, wherein the third processing means sends back to the second processing means a feedback information for the shipped object to the second processing means. The invention allows thus to forward the verifiable information even to a third party in order to verify the object information at a third party.

In one embodiment, the third processing means comprises a third wallet which is verifiably identifiable in the distributed ledger based on a third DID, wherein the method comprises further the following steps: the third wallet receives from the second wallet a verifiable presentation prepared based on the verifiable object information received from the first wallet and preferably based on the first DID; and the third wallet verifies the verifiable presentation preferably based on the first DID.

In one embodiment, the method comprising the further steps: the third processing means sends a revision request for a declaration information to the third wallet; the third wallet requests from the second wallet verifiable proof information for the declaration information; the second wallet verifies the third wallet and its permission to ask verifiable proof information based on the third DID in the distributed ledger; the second wallet prepares the verifiable presentation based on the verifiable object information received from the first wallet and sends the verifiable presentation as the requested proof information to the third wallet; and the third processing means, preferably the third wallet verifies the declared information based on the verifiable presentation.

In one embodiment, the method comprising the step of the second wallet of the second processing means sends the verifiable presentation as declaration information to the third wallet.

In one embodiment, the first subject is an online seller, an addressee of the shipped object a buyer having bought the shipped object from the online seller, wherein the second subject is a customs declarant and the third subject is a customs authority, wherein the declaration information is the customs declaration.

In one embodiment, the method comprising the steps of: the buyer ordering online the shipped object at the online seller via the first processing means; the first processing means ordering the shipped object from a processing means (D1) of the sender; the processing means (D1) sending back the shipment ID of the shipped object to the first processing means; the first processing means sends the shipment ID received from the processing means (D1) of the sender to the first wallet to store the shipment DID in the distributed ledger; the shipped object is sent to the customs declarant via a shipper; the second processing means receives the shipment ID of the shipped object received at the customs declarant and sends the shipment ID to the second wallet.

In one embodiment, the shipped object is sent from a sender to an addressee and wherein the first subject and the second subject are both distinct from the sender and the addressee.

In one embodiment, the method for a plurality of wallets comprising the steps of: operating a first wallet on a first processing means of a first subject according to the method described above; operating a second wallet on a second processing means of a second subject according to the method described above; operating a third wallet on a third processing means of a third subject with the following steps: the third wallet stores a third DID which allows to verify the identity of the third wallet and its permissions in a distributed ledger; the third wallet receives from the second wallet a verifiable presentation prepared based on a verifiable object information received from the first wallet; and the third wallet verifies the verifiable presentation preferably based on the first DID.

In one embodiment, the computer program, when executed on a second processing means of the second subject, to execute the steps of the method of the second wallet, wherein the computer program includes the second wallet and is further configured to: receive the shipment ID of the shipped object; input the shipment ID in the second wallet; receive the verifiable object information from the second wallet; prepare a declaration information based on the verifiable object information; send the declaration information to a third processing means of a third subject; and receive a feedback information from the third processing means, if the shipped object can continue its shipping to the addressee.

In one embodiment, the computer program, when executed on a first processing means of the first subject, to execute the steps of the method of the first wallet, is configured further to allow to connect to the first subject's user accounts of different web-platform to retrieve the object information from the web-platform which hosts the information of the shipped object and to communicate with the first wallet. Other embodiments according to the present invention are mentioned in the appended claims and the subsequent description of an embodiment of the invention.

### Brief description of the Drawings

Fig. 1 is an exemplary prior art system for ordering a product via an e-commerce platform from outside a customs region.
Fig. 2 is an embodiment of a system according to the invention for exchanging objection information about a shipped object.
Fig. 3 is an exemplary flow diagram of the method to exchange verifiable information among different subjects according to the invention. Fig. 3 is divided into Fig. 3A and Fig. 3B, wherein Fig. 3B represents the continuation of the flow shown in Fig. 3A.
Fig. 4 is an exemplary flow diagram of the onboarding process of the wallets involved in the method according to the invention.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

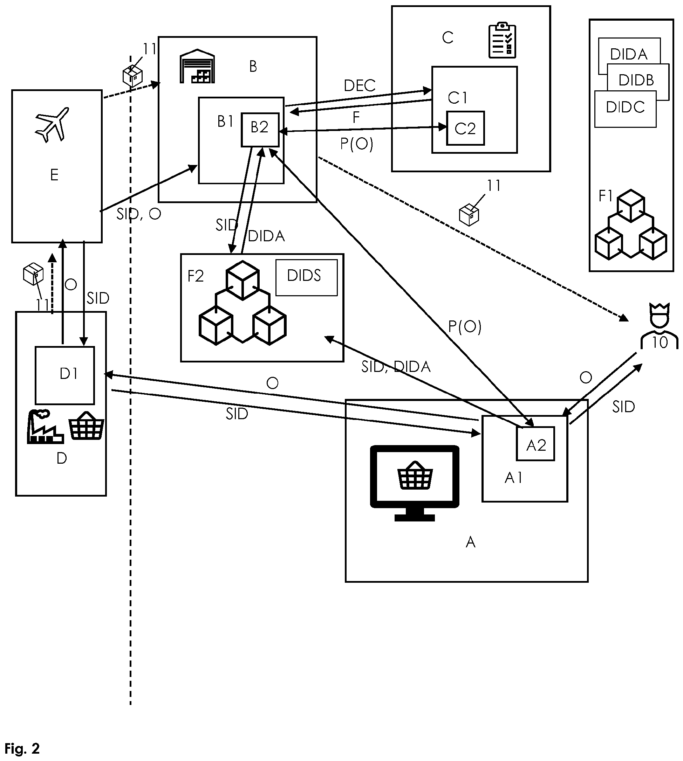

Before starting explaining the invention with the help of the exemplary figures 2 to 4, some terms shall be defined.

A distributed ledger is the consensus of replicated, shared, and synchronized digital data that is geographically spread (distributed) across many sites, countries, or institutions. In contrast to a centralized database, a distributed ledger does not require a central administrator, and consequently does not have a single (central) point-of-failure. A distributed ledger comprises preferably a plurality of records which are linked to each other in a way that the digital data in each record cannot be manipulated without being noticed. In a public distributed ledger anyone is free to join and participate in the core activities of the distributed ledger. Anyone can read, write, and audit the ongoing activities on a public distributed ledger. A private distributed ledger allows only selected and verified participants; the operator has the rights to override, edit, or delete entries on the blockchain. A permissioned distributed ledger has properties of both private and public distributed ledgers. Permissioned distributed ledgers advantages include allowing anyone to join the permissioned network after a suitable identity verification process. Some give special and designated permissions to perform only specific activities on the network.

A blockchain is one type of distributed ledger. A blockchain is an append-only, sequential, chained distributed ledger, composed of an ever-growing sequence of records, also called blocks. Each block/record can store some information which cannot be manipulated.

EBSI (short for European Blockchain Service Infrastructure) is special blockchain. EBSI is a permissioned blockchain.

A wallet, often also called a digital wallet, is the interface between a processing means and one or more distributed ledgers for a certain application. The wallet can store information like one or more certificates, verifiable credentials (VCs), identifications (IDs), decentralized IDs (DIDs), links to records of a distributed ledger, ... . The wallet can have function to perform certain functions like verification of information received from the distributed ledger(s), storing information in the distributed ledger(s), ....The functionalities and/or its source code is often verifiable so that the verifications done in such a wallet are trustworthy. This allows to Issue, hold, present and verify verifiable information without loosing the original trust anchor.

Decentralized identifier (DID) is a verifiable, decentralized digital identity. A DID refers to any subject (e.g., a person, organization, thing, data model, abstract entity, etc.) as determined by the controller of the DID. In contrast to typical, federated identifiers, DIDs have been designed so that they may be decoupled from centralized registries, identity providers, and certificate authorities. Specifically, while other parties might be used to help enable the discovery of information related to a DID, the design enables the controller of a DID to prove control over it without requiring permission from any other party. Thus, a DID is an identifier which is verifiably owned by a subject. The identity is normally represented by a public key or certificate. Since this certificate is verifiable, it is also called a verifiable credential. The public key or certificate or identity has preferably a trust anchor to verify that the public key, certificate or identity belongs indeed to the claimed owner. The same public key, certificate or identity can be used to verify that the information in the DID document indeed origin from the claimed owner. Since the DID document is registered in a distributed ledger, it is verifiable that the information in the DID document were not manipulated. DIDs are URIs that associate a DID subject with a DID document allowing trustable interactions associated with that subject. Each DID document can express cryptographic material, verification methods, or services, which provide a set of mechanisms enabling a DID controller to prove control of the DID. Services enable trusted interactions associated with the DID subject. A DID might provide the means to return the DID subject itself, if the DID subject is an information resource such as a data model. The DID and the DID document are stored in a distributed ledger. DIDs can be used for private and secure connections between two parties. A DID and/or its information is verifiable.

An information (DID, credential, ...) is verifiable means that the integrity (no alteration) of the information and its authorship can easily be checked using a cryptographic-based standard procedure. This verification is realised normally based on a public and private key pair. The private key is only available at the author and the public key related to the private key can be used to verify the integrity of the information. The authorship is normally verified by having a trust anchor for the public key guaranteeing that the public key relates really to the author it claims for. In the present invention, authors or subjects can be identified by DIDs which have a trust anchor through its trusted issuer and a verifiably stored in a distributed ledger. The public key or other tools necessary for the verification process is stored in the DID, preferably its DID document. The verification of a DID or a verifiable presentation involves normally also to verify the trust issuer and the full trust chain of the DID to be verified or used to verify the verifiable presentation.

A verifiable credential is a tamper-evident credential that has authorship that can be cryptographically verified. Verifiable credentials can be used to build verifiable presentations, which can also be cryptographically verified. The claims in a credential can be about different subjects. Verifiable means that the integrity (no alteration) of a Verifiable Credential, as well as the authorship of a Verifiable Credential, can easily be checked using a cryptographic-based standard procedure. Verifiable Attestation, Verifiable Accreditation and verifiable Authorization are different types of verifiable credentials.

A verifiable accreditation is the accreditation to either accredit, attest or authorize.

A verifiable presentation represents the data passed from an entity to a relying party (often also the verifier).

A smart contract (or chain code) is computer code published on a distributed ledger and executed by multiple nodes in the distributed ledger network. Due to the consensus mechanism of the ledger, no one should be able to unilaterally affect the correct execution of the smart contract code.

An issuer is a party that creates and issues Verifiable Credentials (e.g. Verifiable IDs or Verifiable Attestations) to Holders.

A holder will be defined as the entity that is the receiver of a verifiable credential (not necessarily owned by it) and that can use it.

A verifier is a party who requests/verifies Verifiable Credentials (e.g. Verifiable IDs or Verifiable Attestations) or verifiable presentations such as to provide a service.

A trust anchor guarantees the trust for any trust chain. Legal entities can have one or more accreditations from one or more trust chains. Each accreditation gives legal entities different types of issuing capabilities.

A trusted Authorisation Issuer can authorise Legal Entities to self to declare as Trusted Accreditation Issuer. In EBSI, the EBSI Use Case Authorisation Issuer acts as TAI. In the present invention, this is preferably a financial public administration.

A Trusted Accreditation issuer can issue Verifiable Accreditations (Accreditations, Attestations and Authorisations) of the accredited types for legal entities. Must have registered DID Document in DID Registry. In one embodiment, the trusted Accreditation issuer must have a DID registered in Trusted Issuers Registry, must have Verifiable Accreditation registered in Trusted Issuers Registry, must have given accreditation types registered in Trusted Schema Registry. The trusted accreditation issuer can accredit other legal entities to extend the trust chain. The primary purpose is to manage the trust chain to comply with the use case. It enables a hierarchy which can comply with any governance or accreditation model. The trusted Accreditation issuer can be acted by a trusted accreditation organisation (TAO) or a root TAO. A root TAO can additionally self-accredit Verifiable Accreditations (Accreditations, Attestations and Authorisations) of the accredited types for legal entities. A root TAO is the root of trust. It can accredit self or other legal entities to extend the trust chain.

A Trusted Attestation Issuer can issue Verifiable Attestations of the accredited types for natural persons and legal entities. It is the leaf level of trust which issues Verifiable Credentials for the end-users.

A trusted Issuers Registry (TIR) is a register for issuers to register their accreditations.

A Trusted Schema Registry (TSR) is registry for schemas. A schema defines the data objects (e.g. VCs, documents, ...) of a use case. A schema is written preferably in a machine interpretable language that allows to annotate and validate documents, e.g. JSON documents. A schema enables preferably to describe the data format, provide human-readable documentation, validate data for automated testing and ensuring the quality and conformance of submitted data. The verifiable presentation can be defined in a respective schema. In EBSI for example, there is a schema for the accredited verifiable attestation, the verifiable accreditation, respectively. In addition, there could be a schema for the objects specific to the use case, like the DIDs for the subjects defined later, the verifiable presentation defined later.

Accreditations are certifications of being qualified to accredit, attest or authorise something. These are attribute-driven and are always restricted to a specific use case. The restrictions cannot be extended as accreditations pertain to the ability to issue credentials. Depending on the accreditation, the receiving legal entity may accredit, attest or authorise, but always within the boundary of the Trusted Schema Registry associations.

A legal entity accredited as a Trusted Accreditation Issuer may accredit itself to be a Trusted Attestation and Authorisation Issuer.

Authorisations are allowances for self-declaration and/or usage of EBSI services. After the EBP and/or Member State authorises a legal entity, they are granted the right to use EBSI services and may register themselves into the DID registry. Authorisations are attribute driven and have different rights for different use cases. For example, a natural person cannot register a DID document and only some legal entities can apply for Self Declaration.

Self-declaration is an action to self-promote a legal entity into a Trusted Accreditation Issuer without a trust anchor on top of it. This always starts a new trust chain, which is entirely under the control of the legal entity itself. Self-declaration can be done after EBSI Support has issued a Verifiable Authorisation.

Onboarding is the process of registering a DID of a subject on a distributed ledger.

Subsequently, the system of the invention is described in more detail in Fig. 2. An object 11 is shipped from a sender D to an addressee 10. The sender D uses normally a shipper or shipment provider E to send the object from D to 10. The sender D and the shipper E could be the same subject but are normally distinct subjects. The object 11 is normally a parcel but could also be any other shipment unit having a shipment ID SID like a container or a palette. In most cases, it is not visible and/or accessible what is in the object 11 shipped.

The system involves further at least subject A and subject B, preferably further a subject C. The system and method according to the invention will be described at the example of the most preferred example in which the first subject A, the second subject B, the third subject and the addressee 10 are residing in a customs region and subject D is residing outside of the customs region so that the shipped object 11 has to pass the customs. The customs region in the described example is the European Union (EU). Obviously, the invention applies to any other customs region of a country or customs union of several countries forming a common customs region.

The subject B is in this example a customs declarant, i.e. the subject who declares the goods to customs (e.g. postal operators, express carriers, customs agents, etc.).

The subject C in this preferred example is a customs authority of the customs region. The customs authority also known as customs agencies or customs administrations, are government bodies responsible for controlling the import and export of goods, including animals, personal items, and hazardous items, into and out of a country. They implement and enforce international trade regulations and laws, collect customs duties and taxes, prevent smuggling and illegal trade, and facilitate legitimate international travel and trade.

The subject A is in the preferred example is the deemed supplier for the shipped object 11. The deemed supplier is the taxable subject within the customs region who is deemed to receive the goods (shipped object 11) from the underlying supplier D and to supply the goods to addressee 10. The addressee 10 is the final consumer for VAT purposes. Thus, a deemed supplier has the same rights and obligations as a supplier. The deemed supplier is preferably the taxable person facilitating supplies through an electronic interface as laid down for example for the EU in Article 14a of the VAT Directive. The subject A is preferably an online seller selling the shipped object 11 to the addressee 10. The online seller A is preferably a subject that sells goods to individual consumers 10 over the internet (B2C). This could be done through its own website or through third-party e-commerce platforms. Online sellers A, including online marketplaces/platforms can register in one EU Member State and this is valid for the declaration and payment of VAT on all distance sales of goods and cross-border supplies of services to customers within the EU. The online seller A could be an e-commerce platform directly like Amazon, AliExpress, eBay, Etsy, Vinted, etc. or a seller registered at these platforms. The online seller could also have its own website/webshop over which it sells the shipped object 11 to the consumer 10.

In the preferred example, the addressee 10 is a private buyer which buys the shipped product from the online seller A.

However, the preferred example is only one scenario where the invention can be used. The location (inside or outside of a customs region) of the subjects A, B, C, D, E might be important for the preferred example of the invention but might not be important for other embodiments of the invention. The subject B can alternatively also be a security check at an airport to get trusted information about the shipped object 11 before loading it on an airplane. Such a security check can be independent from customs borders. In this case, the subject B could be a local authority responsible at the airport for checking the security of shipped objects, while the subject C could be a central flight control security authority responsible for the control of flight objects or the subject C could be omitted. The subject C is not in all scenarios necessary, but preferred. In such other scenarios, the subject A is still preferably an online seller and the addressee 10 a buyer. However, there might also be other scenarios where the subject A is not an online seller, but another subject A having knowledge over the shipped object, but being different than the addressee 10 and/or to the sender D. E.g. a subject A sending a present to the addressee 10. The subsequently described system and method according to the invention will be described for the preferred example but can analogously applied for other examples.

The system according to the invention comprises a first processing means A1 of the first subject A, a second processing means B1 of the second subject B and a distributed ledger F. Preferably, the system comprises further a third processing means C1 of the third subject C. Preferably, the system comprises a processing means D1 of the sender D.

The distributed ledger F comprises preferably two distinct distributed ledgers F1 and F2. However, it is also possible to do the subsequently described functions of the distributed ledgers F1, F2 done by a single distributed ledger or with a slightly different distribution between the two distributed ledgers F1, F2. The distributed ledger, preferably the first distributed ledger F1 is configured to verifiably identify the subjects A, B, C by their respective DIDs and provide them with their respective permissions. The distributed ledger F, preferably the second distributed ledger F2 is configured to register a shipment DID DIDS. The notation the (first) distributed ledger F1 shall mean that the preferably the first distributed ledger F1 is meant, however, the same function could also be realized by the distributed ledger F in general. The shipment DID DIDS comprises a shipment ID SID of the shipped object 11 associated with a contact information about the subject A, preferably the first DID DIDA of the first subject A. The contact information about the subject A is preferably the contact information of the first wallet A2. The contact information is preferably a link (URI or URL) pointing to the first wallet A2, also called service end point of the first DID DIDA pointing to the first wallet A2. The contact information of the first subject A is preferably the first DID DIDA containing said end point. The shipment DID is registered preferably in the (second) distributed ledger F2 in a block or smart contract of the (second) distributed ledger F2. The shipment DID is linked to the first DID DIDA, i.e. owned by the first subject A. This means that it is verifiable for everybody or for a verifier that the information in the shipment DID origins from the first subject A. Since the shipment DID contains the first DIDA, the verifier can verify in the (first) distributed ledger F1 that the first subject A has the permission to provide a certain service, in particular to provide object information about the shipped object 11.

The distributed ledger F, the first distributed ledger F1 and/or the second distributed ledger F2 is preferably a blockchain. However, also other distributed ledgers can be used.

The first distributed ledger F1 is preferably a permissioned or private distributed ledger controlled by a public authority. In the first distributed ledger F1, a public authority controls the identities of the subjects A, B, C directly or indirectly through a trust chain originating from a public administrational organization. The first distributed ledger F1 is for example the EBSI. However, it would also be possible that the first distributed ledger F1 is a different distributed ledger controlled from another public administration of the respective customs region. The first distributed ledger F1 can however also be a public distributed ledger.

The second distributed ledger F2 is preferably a public distributed ledger. This could be for example ethereum.

In the preferred embodiment, the shipment DID is registered in a second distributed ledger F2 distinct from the first distributed ledger F1 used to identify the subject A, B, C and to generate their trust anchor. This has the advantage that a permissioned or private distributed ledger F1 like EBSI can be used for identifying and authenticating subjects A, B, C and creating their trust, while a public ledger F2 can be used to register the shipment information which requires much more storage than is normally available in permissioned or private distributed ledgers F1. However, it would also be possible to register both information in the same distributed ledger F.

The processing means A1, B1, C1, D1 in the sense of the invention is respectively any computerized means having processing capabilities to realize the subsequently described functions of the respective processing means A1, B1, C1, D1. The processing means A1, B1, C1, D1 can be a server, a client computer, a cloud computing means, etc. The functions of the processing means, e.g. the first processing means A1, can be realized by two or more distinct sub-processing devices, e.g. different computers. The functions can be realized by a software on the processing means A1, B1, C1, D1 or by a dedicated hardware for realizing the respective functions. The processing means A1, B1 and/or C1 comprise respectively a wallet A2, B2, C2. This wallet is preferably realized as a software installed on the respective processing means A1, B1, C1. However, it is also possible to realize the wallet as a hardware means connected to the processing means A1, B1, C1, e.g. as a peripheral device.

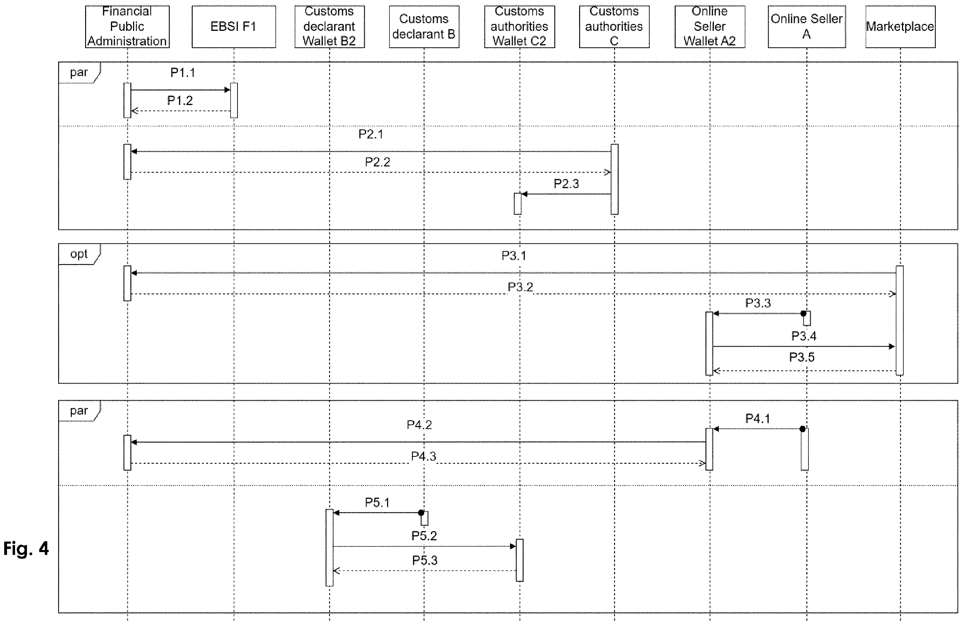

A wallet A2, B2, C2 of a subject A, B, C or a subject A, B, C requests from a trusted issuer a registration of its DID in the distributed ledger F, preferably in the first distributed ledger F1, in the preferred example this is the EBSI (this process is called onboarding). Thus, each wallet A2, B2, C2 is then linked to its respective owner A, B, C by the respective DID stored in the wallet A2, B2, C2. The wallet A2, B2, C2 can be created before or after the registration of the DID of the subject A, B, C. Each subject A, B, C and thus each wallet A2, B2, C2 have (different) permissions which are defined in the DID, preferably in the DID document. The DID of a subject becomes trustworthy by its trust chain of the trusted issuer. The trust chain of the present invention starts preferably at a public authority or administration, e.g. the financial public administration as shown for the preferred example in Fig. 4. This root TAO requests its authorization or accreditation from the EBSI.

Fig. 4 shows the onboarding process for the different subjects A, B, C for the preferred example of the invention. For example, the subject A is identified by the first DID DIDA stored in the first wallet A2 of the subject A. The subject B is identified by the second DID DIDB stored in the second wallet B2 of the subject B. The subject C is identified by the third DID DIDC stored in the third wallet C2 of the subject C.

The first subject A, here the online seller could create its wallet A2 (step P4.1), e.g. by installing a certain software application or add-on. The wallet A2 will then request in step P4.2 a DID or accreditation from a trusted issuer, here the root TAO, with the permissions for subject A (permissions of a seller). Once the onboarding or accreditation of the first DID is completed with the (first) distributed ledger F1, the first wallet A2 of the first subject A is operative. The first wallet A2 will then store the first DID DIDA. The first DID DIDA, preferably its DID document contains preferably a service end point allowing to access or contact the first wallet A2 to request object information. The first subject A has the permission to share object information about a shipped object, especially for a shipped object sold by the first subject A to a customer 10. In the preferred example, the first DID DIDA is also called seller DID and the first wallet A2 is also called online seller wallet.

At complex marketplaces which allow online sellers distinct from the marketplace to register as online sellers on the marketplace, the marketplace can be accredited as sub TAO to act as trusted issuer for the online sellers registered at this marketplace. In this case the marketplace will request in step P3.1 its accreditation as sub TAO from a competent trusted accreditation issuer, e.g. the financial public administration to issue also DIDs for its online sellers. Once this accreditation is confirmed in step P3.2, the online sellers A registered on the marketplace can create its wallet P3.3 which request in step P3.4 the DIDA from the marketplace as sub TAO. Once the seller is accredited, its DID will be stored in the first wallet A2.

The customs authorities C create its wallet C2 in step P2.3. The customs authorities C or its wallet C2 could request the authorization/accreditation (third DID) from the root TAO (if not already root TAO) in step P2.1. When the third DID DIDC of the customs authorities are registered, the third DID is stored in the third wallet C2. The third subject or customs authorities C and/or its third wallet C2 have preferable the accreditation to issue second DID for second subjects B, i.e. for custom declarants. The second DID contains the permission to request object information about a shipped object 11 from the second subject B. The second DID contains preferably further the permission to act as trust issuer (or sub TAO) for the second subjects B to register the second DID DIDB with the (first) distributed ledger F1.

The second subject B, here the customs declarant, creates its wallet B2 in step P5.1. The second subject B or the second wallet B2 request in step P5.2 the accreditation or DID for the second subject B from a trusted issuer, here from the third wallet C2. Once the second accreditation/authorization of the subject B is approved, the second wallet B2 stores in step P5.3 the second DID DIDB in the second wallet B2.

Returning back to Fig. 2, we continue to describe the inventive system.

The first processing means A1 has access to or stores object information O associated to the shipped object 11. The object information O can be the value of the shipped object 11 and/or the content of the shipped object 11. The object information O is preferably the order information O like value of the shipped object 11 and/or type of the shipped object 11, i.e. the ordered product. The order information O could comprise further information about addressee 10 and/or the subject A, i.e. about the buyer/consumer 10 and/or the seller A. The information about the seller A could be the import one stop shop (IOSS) number for the VAT declaration. The first processing means A1 is for example the e-commerce platform used or the client computer of the online seller A to connect to the e-commerce platform or the server hosting the online shop of the seller A. The object information O are preferably defined by an order O given by the consumer/client 10 at the subject A or at its first processing means A1. The processing means A1 has further access to the shipment ID SID associated to the shipped object and/or associated to the objection information O. The shipment ID SID is received at the first processing means A1 from a sender D, preferably from its processing means D1 upon ordering the shipped object 11 from D.

The first processing means A1 comprises the first wallet A2. The first wallet A2 is identified by the first DID DIDA of the first subject A. The first DID is registered in the distributed ledger F, preferably in the first distributed ledger F1, preferably in the EBSI. The first DID DIDA is further stored in the first wallet A2. The first wallet A2 is created by the first subject A in the inventive system as explained above with Fig. 4. The first wallet A2 is configured to receive from the first processing means A1 the object information O associated with the shipment ID SID, to register a shipment DID in the (second) distributed ledger F2 and to send verifiable object information P(O) to a subject/wallet having the permission to ask object information (like subject B or wallet B2).

The first processing means A1 sends the object information O and the shipment ID SID of the shipped object 11 to its first wallet A2. This is normally done, when the first processing means A1 has (ordered the shipped object 11 from D and) received the shipment ID SID from D of the shipped object 11.

The shipment DID registered in the (second) distributed ledger F2 contains (preferably in the DID document) the shipment ID and the first DID DIDA. The shipment DID is verifiably owned by subject A (through DIDA). Anybody can verify cryptographically in the (first) distributed ledger F1 that the information in the shipment DID is originating from subject A (or its wallet A2) and preferably that A has the permission to provide verifiable object information P(O) about the shipped object 11.

When the first wallet A1 receives a request for object information, e.g. from the second subject B, it verifies in the (first) distributed ledger F1, if the requester, e.g. subject B, is indeed the subject it claims to be and/or has the permission to request the verifiable object information P(O). This verification is done based on the second DID of the requester, e.g. the subject B. If the verification is positive, i.e. if the verification results that the requester is who he claims to be and/or has the permission to ask for the verifiable object information P(O), the first wallet A2 sends back to the wallet B2 of the requester B the verifiable object information P(O) requested. The request contains the information about the shipped object 11, e.g. the shipment ID or the shipment DID, so that the first wallet A2 can prepare the verifiable object information related to the shipped object 11 requested. The first wallet A2 requests the object information O preferably from the first processing means A1 which has this information normally stored in a database. E.g. the first wallet A2 sends the shipment ID SID to the first processing means A1 and receives back the object information O from the first processing means A1. The first wallet A2 prepare the verifiable object information P(O) based on the object information O received from the first processing means A1. The verifiable object information P(O) can also contain further information stored in the wallet A2, e.g. information about A or 10 like the lOSS or VAT number of A. The verifiable object information P(O) is verifiable by the requester based on the first DID DIDA. The verifiable object information is preferably written in a machine-readable language, like JSON so that the requesting wallet can read the different fields of the verifiable object information.

The first processing means A1 can be further configured to perform online selling functions, in particular to sell the shipped object 11 to a buyer 10 and to order the shipped object 11 from a sender D outside of the customs region. The online selling functions comprise preferably to receive an order from the buyer 10, to order the shipped object 11 from the sender 11, to receive the shipment ID SID from the sender D and to confirm the shipment of the shipped object 11 to the buyer 10 with the shipment ID SID. The order comprises preferably the selection of the shipped object 11, its associated value and the payment from the buyer 10 to the online seller A. The first processing means A1 can be a marketplace platform, if the online seller A is a marketplace. In this case, the first wallet A2 can be installed in the server of the marketplace, e.g. as add-on software for the marketplace server software. The subject A can also be an online seller with its own web-shop, e.g. the manufacturer himself. The subject A can further be an online seller registered in a complex marketplace. In this case, the first wallet A2 could be integrated in the marketplace (or online seller's) software. The first wallet A2 could be also on a remote server and offered to the processing means A1 via an internet connection like in many SaaS models.

The second processing means B1 comprises the second wallet B2. The second wallet B2 is identified by the second DID DIDB of the second subject B. The second DID DIDB is registered in the distributed ledger F, preferably in the first distributed ledger F1, preferably in the EBSI. The second DID DIDB is further stored in the second wallet B2. The second wallet B2 is created by the second subject B in the inventive system as explained above with Fig. 4.

The second wallet B2 is configured to receive a shipment ID SID from the second processing means B1, to search a shipment DID in the (second) distributed ledger F2 based on the received shipment ID SID, to verify the shipment DID, to identify the owner of the shipment DID (subject A), to request from the owner A of the shipment DID DIDS verifiable object information P(O) about the shipped object 11 related to the shipment ID SID, to verify the received verifiable object information P(O). The verification of the shipment DID DIDS comprises preferably the verification of the integrity of the shipment DID DIDS based on the first DIDA and/or the verification of the authorship of the shipment DID DIDS from the first subject A or the first wallet A2 based on the first DIDA. The verification of the shipment DID DIDS or of its authorship comprises preferably the verification of the identity of the subject A based on the first DID DIDA in the (first) distributed ledger F1. This includes preferably also the verification, if the first subject A or the first wallet A2 has the permission to register a shipment DID DIDS in the (second) distributed ledger F2 and/or to provide verifiable object information P(O). The identification of the owner A of the shipment DID is done based on the first DID DIDA. This includes in particular to retrieve the service end point to contact the first wallet A2 included in the first DID DIDA. The integrity of the end point is also verifiable based on the first DID DIDA. This has normally already been verified by the verification of the shipment DID but could also be verified separately.

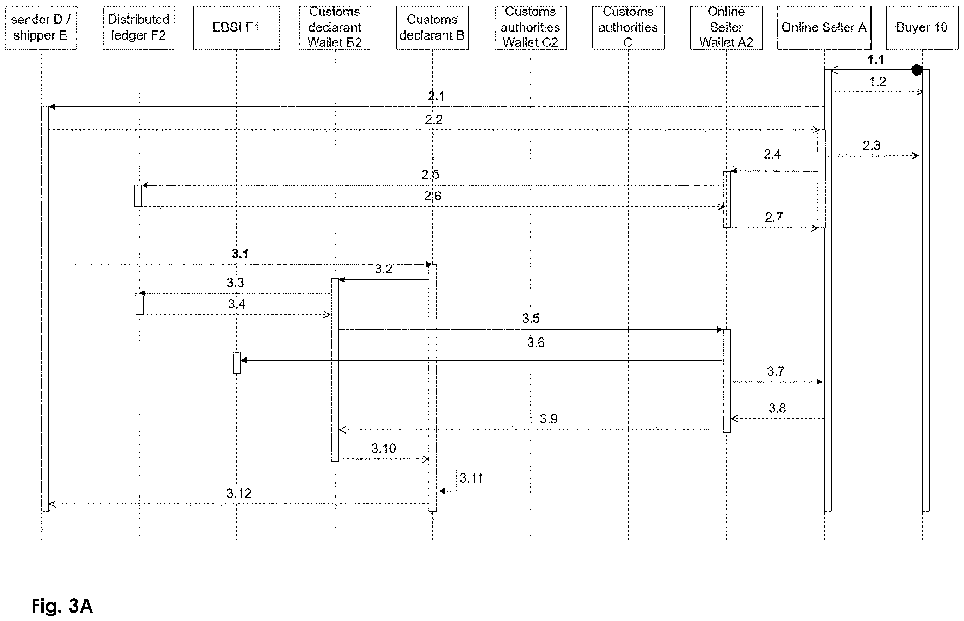

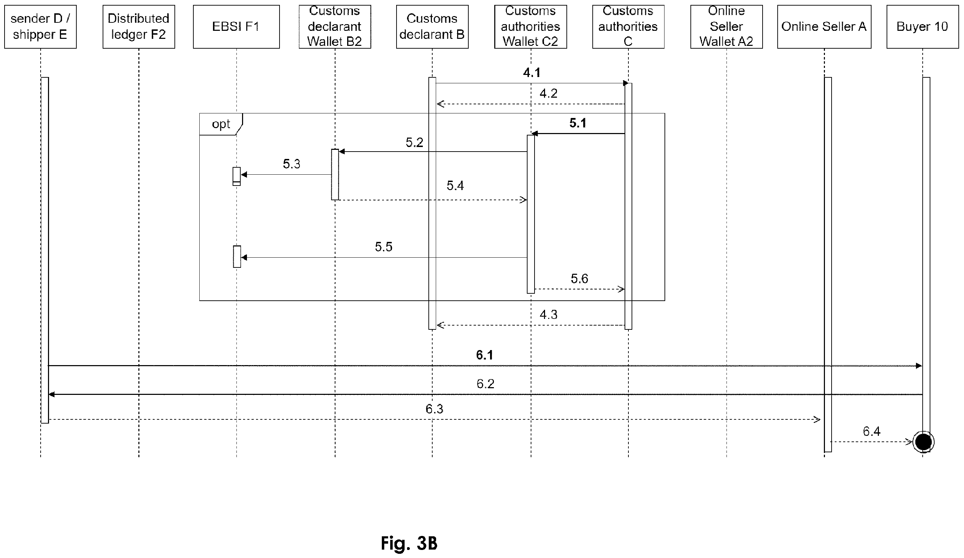

In a preferred embodiment, the second wallet B2 is configured to send a verifiable presentation to the third wallet C2, wherein the verifiable presentation is based on the verifiable object information P(O) received. The verifiable presentation contains preferably customs proofs. Preferably, the verifiable presentation is sent in response to a request from the third wallet C2 to provide proof information, here customs proofs. These steps will be described in more detail below with the process or method of the invention in Fig. 3. Preferably, the second wallet B2 is configured to send to the second processing means B1 a link or URL for requesting the verifiable presentation (presentation link) directly from the second wallet B2.

The second processing means B1 is preferably configured to receive a claimed object information O from the shipper E and the verifiable object information from the second wallet B2. The second processing means B1 is preferably configured to verify based on the verifiable object information P(O), if the claimed object information O is correct. The verification is done preferably in the second processing means B1 outside of the second wallet B2 based on verifiable object information P(O) received from the second wallet B2. However, it would also be possible to realise the verification inside the second wallet B2. In this case, the claimed object information must be input from the second processing means B1 into the second wallet B2. It is also possible that the verification of the claimed object information is omitted completely. This can be the case, when the verifiable object information is directly used to prepare the declaration information DEC. This can also be the case, when the declaration information DEC is prepared based on the claimed object information (without verification). In the latter case, the verifiable object information P(O) must only be requested from the first wallet A2, when the third subject C, preferably its third processing means C1, most preferably its third wallet C2 requests verifiable proof information about the declaration information DEC from the second processing means B1, preferably from the second wallet B2.

The second processing means B1 prepares the declaration information DEC based on the verifiable object information, preferably only if the verification of the claimed object information is correct and sends the declaration information to the third subject C, preferably to its third processing means C1. The declaration information based on the verifiable object information P(O) can be prepared based on the information contained in the verifiable object information P(O) and/or based on the information contained in the claimed object information O verified based on the verifiable object information. The declaration information DEC contains preferably also the presentation link. The declaration information is preferably prepared in the second processing means B1 outside of the second wallet B2. However, it would also be possible to prepare the declaration information (maybe directly verifiable) in the second wallet B2. In this case, the second wallet B2 could send the declaration information directly to the third wallet C2.

The second processing means B1 can be a server or computer at the customs declarant. In the first case, the second wallet B2 can be installed in the server of the customs declarant, e.g. as add-on or plug-in software for the server software interfacing with the software of the second processing means B1 managing the declaration information based on the received shipment ID and eventually the received claimed object information. The second processing means B1 or this declaration management software has preferably an interface for receiving user input regarding the shipment ID SID and eventually the claimed object information. The shipment ID SID can be input by an operator or by an automatic sensor, when the shipped object 11 arrived at the premises, e.g. a warehouse of the subject B. The claimed object information is preferably input via a web-interface by the shipper E or the sender D or their processing means E1 or D1. The software for managing the declaration information to be sent to the third subject C preferably incorporates the second wallet B2.

The third processing means C1 comprises the third wallet C2. The third wallet C2 is identified by the third DID DIDC of the third subject C. The third DID DIDB is registered in the distributed ledger F, preferably in the first distributed ledger F1, preferably in the EBSI. The third DID DIDC is further stored in the third wallet C2. The third wallet C2 is created by the third subject C in the inventive system as explained above with Fig. 4.

In a preferred embodiment, the third processing means C1 is configured to receive the declaration information DEC, i.e. the customs declaration, for the shipped object 11 and to send a feedback information F back to the second processing means B1. The feedback information F contains information, if the shipped object 11 can continue its shipping process to the addressee 10. In case of the preferred example, this is called the clearance for the shipped object 10. If the feedback information is affirmative, the shipped object 11 has clearance and/or can be sent to the addressee 10. Otherwise, the feedback information request further actions from the customs declarant B or subject B. This can be the payment of a customs tax or more information or the providing of proof. The third processing means C1 requests for at least some of the declaration information DEC proof information from the second subject, before sending back the feedback information F. However, this request for proof information preferably happens not for every declaration information or not for every shipped object 11, but only for some of them based on some conditions. The conditions could be random or based on certain characteristics found in the declaration information, e.g. for a certain value. In a preferred embodiment, the third processing means C1 requests the proof information via the third wallet C2. Thus, preferably, the third processing means C1 requests the verification of the declaration information from the third wallet C2. This request from the third processing means C1 to the third wallet C2 contains preferably the presentation link and/or the information necessary for the verification in the third wallet C2. The verification of the declaration information can be the verification of all the information of the declaration information or only for one or more sub-information (constituting a real sub-set of information contained in the declaration information). E.g. the verification can relate only to the value of the shipped object 11 and/or only to the type of content of the shipped object 11. However, it would also be possible that the declaration information is verifiably prepared in the second wallet B2 and sent from the second wallet B2 to the third wallet C2 directly. In this case, the third processing means C1 has already all information of the declaration information DEC in a verifiable manner and it does not need to request proof information, i.e. the customs proofs from the second subject B.

The third wallet C2 is configured to receive from the second wallet a verifiable presentation based on the verifiable object information P(O) received at the second wallet B2 from the first wallet A2. The third wallet C2 is preferably configured to request the verifiable presentation from the second wallet B2 via the presentation link received from the third processing means C1. The verifiable presentation contains preferably the proof information, i.e. the customs proofs, requested from the third processing means C1 via the third wallet C2. However, the verifiable presentation could contain as explained above also directly the declaration information, i.e. a verifiable customs declaration. The verifiable presentation can contain the same information as the verifiable object information or a sub-information or an information retrieved from the verifiable object information. For example, the verifiable object information could contain the exact value of the shipped object 11, while the verifiable presentation contains only that the value is smaller than a threshold (for example a threshold under which you do not have to pay taxes).

The third wallet C2 is further configured to verify the verifiable presentation received from the second wallet B2 in the (first) distributed ledger F1 based on the second DID DIDB and/or based on the first DID DIDA. The verification can comprises an identity verification of the subject B and/or a permission verification of the subject B and/or an authenticity verification of the information in the verifiable presentation. The identify verification comprises to verify in the (first) distributed ledger F1 based on the second DID DIDB, if the subject B is indeed registered as the subject it claims to be. The permission verification comprises to verify based on the second DID DIDB, if the subject B or the second wallet B2 or the second DID DIDB has the permission to send the information of the verifiable presentation. Alternatively or additionally, the verification can comprises an identity verification of the subject A, a permission verification of the subject A and/or an authenticity verification of the information in the verifiable presentation. The identify verification comprises to verify in the (first) distributed ledger F1 based on the first DID DIDA, if the subject A is indeed registered as the subject it claims to be. The permission verification comprises to verify based on the first DID DIDA, if the subject A or the first wallet A2 or the first DID DIDA has the permission to send the information of the verifiable presentation. In any case, the verification comprises an authenticity verification of the information in the verifiable presentation. The authenticity verification comprises to verify based on the second DID (DIDB), if the (content of the) verifiable presentation origins from B or the second wallet B2 and/or to verify based on the first DID (DIDA), if the (content of the) verifiable presentation origins from A or the second wallet A2.

In a preferred embodiment, the third wallet C2 is configured to receive from the third processing means C1 a request for the revision of the declaration information. The request for the revision of the declaration information can refer to the complete declaration information or to a sub-information, e.g. just the value. The third wallet C2 is preferably configured to send the request to the second wallet B2. The third wallet C2 is further configured to receive the verifiable presentation from the second wallet B2 containing the requested proof information (customs proof). Preferably, the third wallet C2 is also configured to verify, if the declaration information is correct based on the proof information received from the second wallet B2. However, it is also possible that this verification is realized outside of the third wallet C2 in the third processing means C1. In this case, the proof information is sent from the third wallet C2 to the third processing means C1 for doing the verification there.

In some embodiments, the system comprises further a processing means of the addressee 10. The processing means of the addressee 10 is configured for example to order the shipped product 11 from the first processing means A2.

In some embodiment, the system comprises further the processing means D1 of the sender D. The processing means D1 of the sender D is configured to receive the order or details of the shipped object 11, i.e. the object to be shipped, from the first processing means A1. The processing means D1 is further configured to receive the shipment ID SID of the shipped object 11, once it is shipped by the shipper E, and to send back to the first processing means A1 the shipment ID SID. The sender D or its processing means D1 preferably inputs the claimed object information with a computer system of the shipper E which stores this information in association with the shipment ID SID and/or forwards this information together with the shipment ID SID to the customs declarant B.

Fig. 3 shows an exemplary process for the method according to the preferred example of the invention.

In step 1.1, the buyer 10 orders at the first processing means A1 or an online seller A an object 11 or product. This involves the payment of the order, i.e. the value of the ordered object 11 (incl. eventual shipment costs or other costs like insurance costs. The buyer 10 realizes the payment until the payment confirmation has reached the first processing means A1, e.g. a marketplace.

In step 1.2, the first processing means A1 of the online seller A confirms the buyer 10 the order, once the payment is confirmed.

In step 2.1, after the buyer 10 has ordered the object 11 (including preferably its payment), the first processing means A1 orders the shipment of the ordered object 11 from the sender D or the shipper E. The shipment of the object 11 from D to the buyer or addressee 10 passes in the preferred example the border of the customs region. The sender D and the object 11 ordered and to be shipped are located outside of the customs region, while the buyer 10 is located inside the customs region. The online seller A is preferably also located (residing inside the customs region. If this is not the case, the online seller A might still provide the object information, but the marketplace over which the online seller A sells the object 11 to the client 10 would be the deemed supplier. Sometimes there are more than one online seller involved in an order, e.g. from several electronic interfaces as for dropshipping. In this case, one of the online sellers is considered as subject A, the last seller who performed the sale with buyer 10 and immediately before the introduction of the goods into the customs territory of the customs region. Therefore the online seller A is the only one who can bring the verifiability of the shipment of the object 11 for customs purposes and the proof of the one considered to be the deemed supplier according to the VAT purposes. In most cases, the online seller A according to the invention is the one considered to be the deemed supplier of the object for customs purposes.

In step S2.2, when the order or object 11 is shipped, the sender D or the shipper E confirm the shipment of the order together with the shipment ID SID to the online seller A, preferably to its processing means A1.

In step S2.3, the first processing means A1 of the online seller A optionally confirms the shipment of the order and the shipment ID SID to the buyer 10.

In step 2.4, the first processing means A1 of the online seller A sends the shipment ID SID to the first wallet A2.

In step 2.5, after having received the shipment ID SID, the first wallet A2 creates a shipment DID DIDS in the (second) distributed ledger F2. The created shipment DID contains, preferably in its DID document, the shipment ID and the first DID DIDA with the end point of the first wallet A2.

In step 2.6, after the shipment DID has been created in the (second) distributed ledger F2, the distributed ledger F2 could confirm or return the shipment DID to the first wallet A2.

In step 2.7, the first wallet A2 preferably confirms the creation of the shipment DID DIDS, e.g. by returning the shipment DID to the first processing means A1.

In step 3.1, the sender D or shipper E submits claimed object information O to the subject B, i.e. to the customs declarant, preferably to its second processing means B1. The claimed object information contains information about the object 11, like value, the type of object, the sender, the addressee, the deemed supplier (e.g. its lOSS number), etc. The claimed object information O contains further the shipment ID SID so that the information about the object 11 can be associated to the shipment ID SID. The claimed object information corresponds preferably to the manifest for customs declaration. In some embodiment, this step could be omitted depending on the legal requirements.

In step 3.2, the second processing means B1 requests the second wallet B2 for object information about the shipped object 11. The request to the second wallet B2 contains the shipment ID SID. This can happen when the shipped object 11 has arrived at the second subject B. This can be detected based on the shipment ID which is scanned by an operator or by an automatic detection system. Alternatively, this request can be sent also when the claimed object information are received at the second processing means B1. In this case, the object information can be requested already before the object 11 has arrived at subject B. This might allow even to give the sender D or shipper E directly a feedback on their claimed object information, when they input this information. Thus, this could already be verified before the object 11 is even shipped (if the claimed object information is submitted before) or when the claimed object information O (e.g. the transport manifest of the transport vehicle to be crossing the border of the customs region) has been sent to the second subject B.

In step 3.3, the second wallet B2 searches the shipment DID in the (second) distributed ledger F2 based on the shipment ID SID. The search of the shipment DID preferably involves to go from record to record to identify the searched shipment DID with the correct shipment ID. The shipment DID can be stored in a block of a block chain or even in a smart contract. The information contained in the shipment DID (shipment ID SID and first DID DIDA) is verifiable based on the first DID DIDA. For example, the first wallet A2 has a private key which is used to generate a signature of the information contained in the shipment DID. The correctness of the signature can be verified with the public key contained in the first DID DIDA. Since the private key is only available to the first wallet A2 (or A in general), it is verifiable that the information in the shipment DID comes from the first wallet A2. There might be other cryptographical methods to make the information contained in the shipment DID verifiable based on the first DIDA.

In step 3.4, when the record with the correct shipment DID DIDS has been found in the (second) distributed ledger F2, the (second) distributed ledger F2 returns the shipment DID DIDS to the second wallet B2. The second wallet B2 retrieves from the shipment DID DIDS the first DID DIDA and the end point of the first wallet A2. The end point of the first wallet A2 is preferably in the first DID DIDA.

The second wallet B2 preferably verifies the shipment DID DIDS (not shown in Fig. 3). The verification of the shipment DID DIDS comprises preferably the verification of the authenticity of the shipment DID (or the information contained in their), the verification of the first DID DIDA. The verification of the authenticity is realized by the first DID DIDA, preferably by a public key of the subject A contained in the first DID DIDA which is used to verify e.g. a signature of the data contained in the shipment DID DIDS. The verification of the first DID DIDA is done in the (first) distributed ledger F1. The verification of the first DID DIDA in the first distributed ledger F1 allows to verify the identity of A or of the first wallet A2, the verification of the permissions of A or A2 and the authenticity of the end point of the first wallet A2 contained in the first DID DIDA. The verification of the permission of the first wallet A2 in the (first) distributed ledger F1 includes to check, if A has the permission to provide verifiable object information for the shipped object 11. If all these verifications are affirmative, i.e. result in the correctness of the verification question, the method continues in step 3.5.

In step 3.5, the second wallet B2 sends a request for verifiable object information to the first wallet A2. This request contains object identification information about the shipped object 11 which allows to retrieve the requested object information. This information could be the shipment ID SID or the shipment DID. The information could however also be another information about the object 11 put in the shipment DID to identify the shipped object 11 to which the requested information relates to. The requested verifiable object information P(O) is a verifiable data structure which contains the requested object information O. In the preferred example, the requested object information are the customs proof.

In step 3.6, the request is preferably verifiable based on the second DID DIDB. The first wallet A2 will verify the request from the second wallet B2 based on the second DID DIDB. The verification involves preferably the verification of the integrity of the request and of its authorship from subject B. The authorship can be verified by verification the second DID DIDB in the (first) distributed ledger F1. The verification comprises preferably further the verification of the permissions of the second DID DIDB in the first distributed ledger F1, in particular, if the second subject B or its wallet B2 has the permission to request verifiable object information about the shipped object 11 and/or if the second subject B has the permissions of a custom declarant. If the verification(s) is affirmative, the process continues in step 3.7.

In step 3.7, the first wallet A2 requests from the first processing means A1 the requested object information. The request to the first processing means A1 contains preferably the object identification information, preferably the shipment ID SID which allows the first processing means A1 to identify the requested object information O. The first processing means A1 can retrieve this information from its databases, e.g. about the orders realized and returns in step 3.8 the requested object information O to the first wallet A2. The requested object information O contains preferably the value of the shipped object, the type of content of the shipped object and/or the involved subject(s) in the order (buyer 10, online seller B, sender D). The requested object information O contains preferably also the online seller A identification or deemed supplier identification, preferably in the form of the import one stop shop (IOSS) number. The requested object information O contains preferably also proof information about the online seller A being the seller of the object 11, e.g. the lOSS proof, commercial invoice and transaction proof with buyer 10. The requested object information is brought in a machine-readable information, e.g. in JSON. This can happen already in the first processing means A1 or in the first wallet A2. The first wallet A2 makes the requested object information O verifiable using the first DID DIDA to obtain the verifiable object information P(O).

In step 3.9, the first wallet A2 sends the verifiable object information P(O) to the second wallet B2. The second wallet B2 preferably verifies the verifiable object information P(O), preferably its integrity and its authorship from A based on the first DID DIDA.

In step 3.10, the second wallet B2 returns the requested object information O to the second processing means B1. The requested object information O can be returned directly as the verifiable object information P(O) as received or as the requested object information read out from the verifiable object information P(O) and evtl. even processed. Preferably, the second wallet B2 returns also the presentation link to request the verifiable presentation.

In step 3.11, the second processing means B1 compares the claimed object information received from the shipper E or the sender D with the requested object information received from the first wallet A2 (through the second wallet B2). As mentioned already above, the comparison is done preferably in the second processing means B1 outside of the second wallet B2. However, it would also be possible to do this comparison or verification in the second wallet B2. In this case, the step 3.10 would be rather to send claimed object information to the second wallet B2 from the second processing means B1 and the comparison result would be given back to the second processing means B1.

In step 3.12, if the comparison results that the claimed object information is not correct or contradicts the requested object information, the second processing means B1 can reject the claimed object information received from D or E. As mentioned before, this can happen already right after D or E has input the claimed object information in the user interface of the shipper E or B1. If the comparison is affirmative, i.e. results that the claimed object information O is correct or is confirmed by the requested object information P(O), the process can continue with step 4.1.

In step 4.1, the second processing means B1 prepare the declaration information DEC. In the preferred example, the declaration information is the customs declaration. The declaration information DEC is prepared based on the verifiable object information O or better said based on the requested object information being verified based on the verifiable object information. The declaration information DEC can be prepared directly based on the requested object information O. In this case, the steps 3.1, 3.11 and 3.12 could even be omitted. Alternatively, the declaration information DEC can be prepared based on the claimed object information O verified by the requested object information, thus indirectly prepared based on the requested object information. The declaration information can be prepared also based on both, the requested and claimed object information. The declaration information DEC is preferably prepared in the second processing means B1 outside of the second wallet B2. The prepared declaration information DEC comprises preferably the presentation link. However, it would also be possible that the declaration information DEC is prepared in the second wallet B2. In this case, the declaration information DEC could be send verifiably, i.e. as a verifiable presentation to the third wallet C2.

In step 4.2, the custom authorities C or its processing means C1 could return that the processing of the declaration information DEC is in process.

In a preferred embodiment, third subject C or its processing means C1 select only a part of the customs declarations for which a revision is necessary. That means, if C receives 100 customs declarations, for example only 10 are revised. For all others, the clearance of the shipped object 11 is sent back to the second processing means B1 without further revision in step 4.3. This selection can be done statistically or based on some parameters of the customs declaration. If there is a revision of the customs declaration or the declaration information, the process continues with the steps 5.1 to 5.6, otherwise, the feedback information F is returned directly in step 4.3 to clear the shipped object 11.

In step 5.1, the third processing means C1 sends the third wallet C2 a request to verify the declaration information DEC. This verification request includes the presentation link. the parameter(s) of the declaration information DEC which shall be checked. The parameters could be always the same, e.g. value and content, just value, etc. In one embodiment, it could however also be that the third processing means C1 verifies in one case the value and in another case the type of product.

In step 5.2, the third wallet C2 requests from the second wallet B2 proof information, in our example the customs proofs, to verify the declaration information DEC.

In step 5.3, the second wallet B2 verifies the request from the third wallet C2. The verification of the request contains preferably the verification of the third DID DIDC in the first distributed ledger F1 to check the correct authorship of the request and the permissions of C (to request the proof information and/or to be accredited as customs authority). If the verification is affirmative, the process continues with step 5.4.

In step 5.4, the second wallet B2 prepares the requested proof information based on the verifiable object information (i.e. based on the requested object information verified based on the verifiable object information). The requested proof information is sent in the form of a verifiable presentation to the third wallet C2. The requested proof information can be identical to the requested object information. In this case, the verifiable object information P(O) received can be sent directly to the third wallet or the requested object information O verified by the received verifiable object information P(O) can be used to prepare the verifiable presentation to the third wallet. However, it is also possible that the verifiable presentation to the third wallet C2 contains only a sub-information or a processed information of the requested object information. For example, the value could be 30 EUR and the verifiable presentation transmits that the value is smaller than 100 EUR. The verifiable presentation is cryptographically prepared such that the contained information (even though presented by subject B) is verifiable by the first DID DIDA, e.g. a by a signature of A. The prepared verifiable presentation with the requested proof information are sent to the third wallet C2.

In step 5.5, the verifiable presentation with the verifiable proof information are verified. The verification of the verifiable presentation or verifiable proof information is done in the first distributed ledger F1 based on the first DID DIDA and/or based on the second DID DIDB (see detailed description of the verification above).

(If the verification is affirmative,) the third wallet C2 could verify based on the proof information received, if the declaration information is correct. In step 5.6, the verification result is send back to the third processing means C1 in order to prepare the feedback information F to the second processing means B1 in step 4.3. If the verification results that the declaration information was correct, the feedback information F releases the shipped object 11 so that it can continue its shipping process to the addressee 10. If the verification results that the declaration information was not correct, the feedback information might request further information from the second processing means B1.

Once the shipped object 11 is released, it can be delivered in 6.1 to the addressee 10. The shipper E is informed that the shipped object 11 has been delivered in step 6.2 and sends in step 6.3 a message to the online seller A, preferably its processing means A1 that the shipped object has been delivered or that the shipment has been completed. The online seller A1 further confirms this to the addressee 10 in step 6.4.

The revision of the declaration information was done in the third wallet C2. It is however also possible that the third wallet C2 sends just the verified proof information to the third processing means C1 which verifies then the correctness of the declaration information DEC based on the verified proof information P(O).

The process shown in Fig. 3 is only an example. The inventive idea can be varied for different applications. For example, the third subject, the third wallet C2 and the complete communication between the third subject C and the second subject B could be omitted in a less preferred embodiment. The transmission of the declaration information DEC and its revision can also be varied. For example, the verifiable object information P(O) can be directly used to prepare a verifiable presentation with the declaration information DEC and sent directly to the third wallet C2. This would overcome the need of the customs manifest in step 3.1 and the need of preparing the declaration information in the second processing means B1. Many more variations are possible. It should be understood that the present invention is not limited to the described embodiments and that variations can be applied without going outside of the scope of the claims.

## Claims

1. Method for obtaining at a second subject (B) verifiable object information about a shipped object (11) from a first subject (A), the method comprising the steps of:
a first processing means (A1) of the first subject (A) stores object information about a shipped object (11), the first processing means (A1) comprises a first wallet (A2) which is verifiably identifiable in a distributed ledger (F1) based on a first DID (DIDA), wherein the first DID (DIDA) contains an end point to contact the first wallet (A2);
the first wallet (A2) receives a shipment ID (SID) for the shipped object (11) from the first processing means (A1);
the first wallet (A2) stores a shipment DID (DIDS) in the distributed ledger (F2), wherein the shipment DID (DIDS) contains the shipment ID (SID) and the first DID (DIDA);
a second processing means (B1) of the second subject (B) comprises a second wallet (B2) which is verifiably identifiable in the distributed ledger (F1) based on a second DID (DIDB);
the second wallet (B2) receives the shipment ID (SID) of the object;
the second wallet (B2) retrieves from the distributed ledger (F2) shipment DID (DIDS) based on the shipment ID (SID) and retrieves the first DID (DIDA) from the shipment DID (DIDS);
the second wallet (B2) verifies the first DID (DIDA) in the distributed ledger (F1) and verifies the shipment DID based on the first DID (DIDA);
the second wallet (B2) contacts the first wallet (A2) based on the end point of the first DID (DIDA) and requests verifiable object information (P(O)) from the first wallet (A2);
the first wallet (A2) verifies the second wallet (B2) and its permission to request verifiable object information (P(O)) based on the second DID (DIDB) in the distributed ledger (F1);
the first wallet (A2) requests from the first processing means (A1) the requested object information (O);
the first wallet (A2) receives the object information (O) from the first processing means (A1) and prepares the verifiable object information P(O) based on the received object information (O) and based on the first DID (DIDA) to obtain the verifiable object information (P(O)) which is verifiable based on the first DID (DIDA);
the first wallet (A2) sends the verifiable object information (P(O)) prepared to the second wallet (B2);
the second wallet (B2) verifies the verifiable object information (P(O)) based on the first DID (DIDA).

2. Method according to claim 1, wherein the distributed ledger comprises a first distributed ledger (F1) and a second distributed ledger (F2) distinct from the first distributed ledger (F1), wherein the first DID (DIDA), the second DID (DIDB) and the third DID (DIDC) are registered and verifiable in the first distributed ledger (F1), and the shipment DID (DIDS) is registered and searchable in the second distributed ledger (F2).

3. Method according to one of the previous claims, wherein the second processing means (B1) receives (11) an object information (O) associated to the shipment ID (SID) claimed by a shipper (D) of the shipped object (11), wherein the second processing means (B1) receives the verifiable object information (P(O)) from the second wallet (B2) and compares the claimed object information (O) with the verifiable object information (P(O)) to verify the claimed object information (O).

4. Method according to one of the previous claims, wherein the second processing means (B2) sends declaration information (DEC) based on at least one of the verifiable object information (P(O)) and the claimed object information to a third processing means (C1) of a third subject (C), wherein the third processing means (C1) sends back to the second processing means (B1) a feedback information (F) for the shipped object (11) to the second processing means (B2).

5. Method according to claim 4, wherein the third processing means (C1) comprises a third wallet (C2) which is verifiably identifiable in the distributed ledger (F) based on a third DID (DIDC), wherein the method comprises further the following steps:
the third wallet (C2) receives from the second wallet (B2) a verifiable presentation (P(O)) prepared based on the verifiable object information (P(O)) received from the first wallet (A2) and preferably based on the first DID (DIDA);
the third wallet (C2) verifies the verifiable presentation (P(O)) preferably based on the first DID (DIDA).

6. Method according to claim 5 comprising the further steps:
the third processing means (C1) sends a revision request for a declaration information (DEC) to the third wallet (C2);
the third wallet (C2) requests from the second wallet (B2) verifiable proof information (P(O)) for the declaration information (DEC);
the second wallet (B2) verifies the third wallet (C2) and its permission to ask verifiable proof information (P(O)) based on the third DID (DIDC) in the distributed ledger (F1);
the second wallet (B2) prepares the verifiable presentation (P(O)) based on the verifiable object information (P(O)) received from the first wallet (A2) and sends the verifiable presentation (P(O)) as the requested proof information to the third wallet (C2);
the third processing means (C1), preferably the third wallet (C2) verifies the declared information based on the verifiable presentation (P(O)).

7. Method according to claim 5 comprising the steps :
the second wallet (B2) of the second processing means (B1) sends the verifiable presentation as declaration information to the third wallet (C2).

8. Method according to one of claims 4 to 7, wherein the first subject (A) is an online seller, an addressee (10) of the shipped object (11) a buyer having bought the shipped object (11) from the online seller (A), wherein the second subject (B) is a customs declarant and the third subject (C) is a customs authority, wherein the declaration information (DEC) is the customs declaration.

9. Method according to claim 8 comprising the steps of:
the buyer (10) ordering online the shipped object at the online seller (A) via the first processing means (A1);
the first processing means (A1) ordering the shipped object (11) from a processing means (D1) of the sender (D);
the processing means (D1) sending back the shipment ID (SID) of the shipped object to the first processing means (A1);
the first processing means (A1) sends the shipment ID (SID) received from the processing means (D1) of the sender (D) to the first wallet (A2) to store the shipment DID (DIDS) in the distributed ledger (F1);
the shipped object (11) is sent to the customs declarant (B) via a shipper (E);
the second processing means (B1) receives the shipment ID of the shipped object (11) received at the customs declarant (B) and sends the shipment ID (SID) to the second wallet (B2).

10. Method according to one of the previous claims, wherein the shipped object (11) is sent from a sender (D) to an addressee (10) and wherein the first subject (A) and the second subject (B) are both distinct from the sender (D) and the addressee (10).

11. Method for a first wallet of a first subject (A) to provide verifiable object information (P(O)) to a second subject (B) about a shipped object (11), the method comprising the following steps:
the first wallet (A2) storing a first DID (DIDA) which allows to verify the identity of the first wallet (A2) and its permissions in a distributed ledger (F1), wherein the first DID (DIDA) contains an end point to contact the first wallet (A2);
the first wallet (A2) receives a shipment ID (SID) for the shipped object (11) from a first processing means (A1) of the first subject (A);
the first wallet (A2) stores a shipment DID (DIDS) in the distributed ledger (F2), wherein the shipment DID (DIDS) contains the shipment ID (SID) and the first DID (DIDA);
the first wallet (A2) receives from a second wallet (B2) a request to provide verifiable object information (P(O)) from the first wallet (A2), wherein the first wallet (A2) receives the request at the end point defined in the first DID (DIDA);
the first wallet (A2) verifies in the distributed ledger (F1) the second wallet (B2) and its permission to request verifiable object information (P(O)) based on a second DID (DIDB) of the second wallet (B2);
the first wallet (A2) requests from the first processing means (A1) the requested object information (O);
the first wallet (A2) receives the object information (O) from the first processing means (A1) and prepares the verifiable object information (P(O)) based on the received object information (O) and based on the first DID (DIDA);
the first wallet (A2) sends the verifiable object information (P(O)) prepared to the second wallet (B2).

12. Method for a second wallet of a second subject (B) to receive verifiable object information (P(O)) from a first subject (A) about a shipped object (11), the method comprising the following steps:
the second wallet (B2) stores a second DID (DIDB) which allows to verify the identity of the second wallet (B2) and its permissions in a distributed ledger (F1);
the second wallet (B2) receives the shipment ID (SID) of the object from a second processing means (B1) of the second subject (B);
the second wallet (B2) retrieves from the distributed ledger (F2) a shipment DID (DIDS) based on the shipment ID (SID) and retrieves the first DID (DIDA) from the shipment DID (DIDS);
the second wallet (B2) verifies the first DID (DIDA) in the distributed ledger (F1) and verifies the shipment DID based on the first DID (DIDA);
the second wallet (B2) contacts the first wallet (A2) based on an end point of a first wallet (A2) of the first subject, wherein the end point of the first wallet (A2) is contained in the first DID (DIDA);
the second wallet (B2) requests verifiable object information (P(O)) from the first wallet (A2);
the second wallet (A2) receives the verifiable object information (P(O)) from the first wallet (A2);
the second wallet (B2) verifies the verifiable object information (P(O)) based on the first DID (DIDA).

13. Method for a plurality of wallets comprising the steps of:
operating a first wallet (A2) on a first processing means (A1) of a first subject (A) according to the method of claim 11;
operating a second wallet (B2) on a second processing means (B1) of a second subject (B) according to the method of claim 12;
operating a third wallet (C2) on a third processing means (C1) of a third subject (C) with the following steps:
the third wallet (C2) stores a third DID (DIDC) which allows to verify the identity of the third wallet (C2) and its permissions in a distributed ledger (F1),
the third wallet (C2) receives from the second wallet (B2) a verifiable presentation (P(O)) prepared based on a verifiable object information (P(O)) received from the first wallet (A2);
the third wallet (C2) verifies the verifiable presentation (P(O)) preferably based on the first DID (DIDA).

14. Computer program comprising a set of instructions to perform, when executed on a processing means, the steps of a method of one of the previous claims.

15. Computer program according to claim 14 configured, when executed on a processing means (B1) of the second subject (B), to execute the steps of the method according to claim 12, wherein the computer program includes the second wallet (B2) and is further configured to:
receive the shipment ID (SID) of the shipped object (11);
input the shipment ID (SID) in the second wallet (B2);
receive the verifiable object information (P(O)) from the second wallet (B2);
prepare a declaration information (DEC) based on the verifiable object information (P(O));
send the declaration information (DEC) to a third processing means (C1) of a third subject (C2);
receive a feedback information (F) from the third processing means (C1), if the shipped object (11) can continue its shipping to the addressee (10).
